Europäisches Patentamt

European Patent Office

Office européen des brevets

(11) Publication number: **0 217 751**
**A1**

(12)

# EUROPEAN PATENT APPLICATION

(21) Application number: **86830204.3**

(22) Date of filing: **15.07.86**

(51) Int. Cl.⁴: **B 23 K 31/06**

(30) Priority: **29.07.85 IT 2174685**

(43) Date of publication of application:
**08.04.87 Bulletin 87/15**

(84) Designated Contracting States:
**AT BE CH DE FR GB LI LU NL SE**

(71) Applicant: DALMINE S.p.A.
Via Brera, 19
Milano(IT)

(72) Inventor: Saligeri Zucchi, Virgilio
Via delle Stelline, 1
Milano(IT)

(74) Representative: Adorno, Silvano et al,
c/o SOCIETA' ITALIANA BREVETTI S.p.A. Via Carducci, 8
I-20123 Milano(IT)

(54) **Process for manufacturing electrically welded steel tubes and pipes from a pre-heated strip.**

(57) A process is described for manufacturing steel tubes and steel pipes by electric welding of strips so formed to get a complete hollow bar, wherein the steel strip is pre-heated before forming. The pre-heating temperature is preferably near to the welding temperature and possibly, at the exit from a furnace which may be electric, e.g. of the induction type, a gas furnace or an oil furnace, etc. and before the forming unit there can be provided means capable of accomplishing an edge conditioner step.

EP 0 217 751 A1

## "PROCESS FOR MANUFACTURING ELECTRICALLY WELDED STEEL TUBES AND PIPES FROM A PRE-HEATED STRIP"

The present invention relates to a process for manufacturing electrically welded steel tubes and pipes, formed from a pre-heated strip.

It is known that the manufacture of the so-called welded tubes or welded pipes, i.e. obtained by welding, has experienced an enourmous diffusion in the last fourth of century while the welding techniques and the relevant controlling possibilities were gradually improving, from time to time following different orientations, mainly in relation to the final use of the product.

Among the various methods developed and now of common application, the most employed is certainly the method of electric welding without the addition of filler metal, a general denomination comprising several types which can be classified in two fundamental methods such as the resistance-based ERW (Electric Resistance Welding), at present used almost exclusively in special applications, and the induction-based EIW (Electric Induction Welding), generally at radio-frequency.

However it is well known to those skilled in the art that both these methods, although show only few limitations as regards the thickness and quality of steel, however are not exempt from serious drawbacks of irreversible character affecting in particular the region in the vicinity of weld seam. The most important among these drawbacks are:

a) a reduction of mechanical strength;

b) a reduction of hardness;

c) an increase of the grain size, i.e. of the pearlite-ferrite structure;

d) a reduction of the corrosion strength as a consequence of point c) above.

The common origin of these harmful phenomena is certainly to be imputed to the extremely high speed of heat transmission by conduction from the fusion line, where temperatures of the order of 1500°C are reached, to the immediately contiguous zones of the tube or pipe which are at room temperature and cause therefore a quick cooling of the welding seam. In other words the above-mentioned inconveniences can be considered to be produced by the high thermal gradient being generated between adjacent tube generatrices and giving rise to a remarkable disuniformity of mechanical and phisico-chemical characteristics along the annular ring representing a cross-section of the tube. It is admitted that subsequent processes of heat treatment are known, mostly a treatment localized along the welding seam, thereby trying to overcome the above-mentioned drawbacks, but these processes do not solve the problem, or only in a limited extent, and in the majority of cases prove to be inadequate, as they never allow the desired original conditions to be restored, in spite of the additional costs involved.

The object of the present invention is to provide a process designed to operate on a steel strip which has been suitably pre-heated before its forming so as to reduce the thermal difference between the welding line and the contiguous zones.

Also according to the invention it has been found that a pre-heating up to a temperature near to the welding temperature is preferred, until almost reducing to zero the above-mentioned thermal difference, so that the entire periphery of the tube cross-section will be cooled by convection and radiation only, thus in a substantially homogeneous manner, with a low gradient and without conduction. All those above mentioned drawbacks are thus avoided, which are related to the heat transmission by conduction.

Merely by way of example, without any limitation, the required pre-heating can be obtained by means of an electric furnace, especially a medium-frequency induction furnace, or a gas furnace, preferably inert gas shielded, or by whichever else known means provided upstream of the strip forming rolls.

Between the exit of the pre-heating furnace and the forming units, usually by rolls as it is known in the art, there may be provided devices, also known, for preparing the edges to be welded for the purpose of improving the welding characteristics and facilitating the subsequent bead removal.

Obviously the forming rolls as well as all the other parts of the system being in contact with the pre-heated strips must be adapted to the high temperature of the latter, that may reach e.g. 700-900°C or more. Suitable materials should thereby be adopted, which can resist to these temperatures, and possibly devices with circulation of cooling fluid for a better heat removal. It should also be appreciated that variations of electric resistivity and/or magnetic permeability of the steel, due to high temperature, may require certain adaptations of the welding equipment with respect to the conventional systems in the stage of adjustment and setting up, these adaptations being however within the reach of specialized technicians without particular difficulties to be faced.

From the point of view of layout, in case of welded pipe mills to be installed from the beginning there are no difficulties at all, whereas the need of mounting a pre-heating furnace on a pre-existing electric welded pipe mill, to be modified could result in a problem of floor space, which however can be easily solved.

Much easier and profitable should be on the contrary to convert, according to the process of the invention, non-electric welded pipe mills previously provided with a heating furnace. By way of example reference could be made to forge or pressure welding systems (edge to edge, BW-Butt Welding, Fretz-Moon) for which the conversion would be limited to:

a) replacing the forming rolls with other stands suitable to electric welding (application of insulated rolls with fin, etc.);

b) removing the nozzles for blowing oxygen, pure or mixed, in the area of contacting edges;

c) applying an electric welding equipment, preferably of the RF induction type, having a reduced size.

It is convenient to mention the fact that the forge or pressure welding systems are at present almost out of use owing to their poor characteristics and they could be recovered for a high quality production with a sensible economic advantage. In fact they, due to their nature, are suitable only to be used with low-carbon steels, lend themselves to manufacturing tubes of relatively small thickness, such as in steel structural work, and often give rise to some small leaks and sweats along the line of contact, such as to prevent however the tubes from being used in the plants under pressure and in general with conveyance of fluid.

It is immediately apparent that with the described arrangements these plants can be easily converted to the accomplishment of the process according to the invention, whereby all the above heavy limitations are dismissed, thus allowing a much higher flexibility, multivalence and possibility of exploitation of the plant. On the other hand it will be easily noted that such a plant, upon conversion, cannot be considered any longer of the forge or pressure welding type, but will be included among the electric welding systems, being in particular adapted to the implementation of the process according to the invention.

Possible additions and/or modifications brought about by those skilled in the art in respect of the example of process, as described above in its generality, as well as of the means for its accomplishment will not exceed the scope of the invention.

CLAIMS

1.  A process for manufacturing electrically welded steel tubes and pipes from a pre-heated steel strip, comprising the steps of forming the strip until causing it to take a cylindrical shape with facing edges along a generatrix and of electric welding along one longitudinal seam, characterized by the fact that the steel strip is preliminarly subjected to a pre-heating step at a temperature higher than the room temperature.

2.  A process according to claim 1, characterized by the fact that said temperature of pre-heating is near to the welding temperature.

3.  A process according to claim 1 or 2, characterized by the fact that the pre-heated strip, before forming, undergoes an edge preparation step of known type.

European Patent Office

**EUROPEAN SEARCH REPORT**

Application number

| | **DOCUMENTS CONSIDERED TO BE RELEVANT** | | EP 86830204.3 |
|---|---|---|---|
| Category | Citation of document with indication, where appropriate, of relevant passages | Relevant to claim | CLASSIFICATION OF THE APPLICATION (Int. Cl.4) |
| X | US - A - 4 357 512 (NISHIMOTO) <br> * Fig. 1; abstract * <br> -- | 1-3 | B 23 K 31/06 |
| X | US - A - 2 673 274 (J.T. VAUGHAN) <br> * Fig. 1-3 * <br> -- | 1,2 | |
| X | DE - C - 678 865 (FRANCIS) <br> * Fig. 1 * <br> -- | 1 | |
| X | DE - B - 1 011 842 (FRIEDRICH KOKS) <br> * Totality * <br> -- | 1,2 | |
| A | US - A - 2 748 734 (F.J. KENNEDY) <br> * Totality * <br> ---- | 1-3 | TECHNICAL FIELDS SEARCHED (Int. Cl.4) <br><br> B 23 K 11/00 <br> B 23 K 31/00 |

The present search report has been drawn up for all claims

| Place of search | Date of completion of the search | Examiner |
|---|---|---|
| VIENNA | 06-11-1986 | BENCZE |